(19) Europäisches Patentamt
European Patent Office
Office européen des brevets

(11) **EP 4 455 650 A1**

(12) **EUROPEAN PATENT APPLICATION**

(43) Date of publication:
**30.10.2024 Bulletin 2024/44**

(51) International Patent Classification (IPC):
**G01N 23/041** (2018.01)

(21) Application number: **24170491.5**

(52) Cooperative Patent Classification (CPC):
**G01N 23/041;** G21K 1/06

(22) Date of filing: **16.04.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074474**

(71) Applicant: **KONICA MINOLTA, INC.**
**Tokyo 100-7015 (JP)**

(72) Inventor: **MATSUSAKA, Mika**
**Tokyo, 100-7015 (JP)**

(74) Representative: **Gille Hrabal**
**Partnerschaftsgesellschaft mbB**
**Patentanwälte**
**Brucknerstraße 20**
**40593 Düsseldorf (DE)**

(54) **X-RAY TALBOT IMAGING APPARATUS AND X-RAY TALBOT IMAGING METHOD**

(57) Disclosed is an X-ray Talbot imaging apparatus (100) for nondestructive inspection, the apparatus including: a radiation source (11); a subject table (13); a plurality of gratings (14, 15); and a radiation detector (16). The radiation source, the subject table, the plurality of gratings, and the radiation detector are provided in order side by side in a radiation irradiation axis direction, the plurality of gratings include at least a first grating (14) and a second grating (15) in order from a grating close to the subject table, and an object that absorbs visible light is placed between the first grating and a subject.

FIG.1

EP 4 455 650 A1

**Description**

BACKGROUND OF THE INVENTION

TECHNICAL FIELD

The present invention relates to an X-ray Talbot imaging apparatus and an X-ray Talbot imaging method.

DESCRIPTION OF RELATED ART

Conventionally, as described in Japanese Unexamined Patent Publication No. 2013-255536 and Japanese Unexamined Patent Publication No. 2020-024170, an X-ray Talbot imaging apparatus using a Talbot interferometer or a Talbot - Lau interferometer having a plurality of gratings is known. In a nondestructive inspection using an X-ray Talbot imaging apparatus, after a region of interest is found on a Talbot image captured by the X-ray Talbot imaging apparatus, the position of the region of interest in a subject is specified. Thereafter, a place including the specified position in the subject is sampled, and a durability evaluation test is performed, or comparison with simulation data is performed.

The identification of the position in the subject is performed by, for example, imaging the subject using a camera capable of acquiring a visible light image or the like in combination with the X-ray Talbot imaging apparatus. Specifically, the user can confirm, on the visible-light image, the region of interest on the Talbot image. Thus, the user can specify the position in the subject.

SUMMARY OF THE INVENTION

In imaging of a subject using a camera capable of acquiring the above-described visible light image or the like, there has been a problem that a structure is reflected in the background of the subject and the detectability in a camera image is reduced. Specifically, the accuracy of identifying the position in the subject decreases due to an increase in the amount of light incident on a camera image (compression of the dynamic range due to saturation of the amount of light) caused by reflection off the surface of a grating, which is a structure, used in the X-ray Talbot imaging apparatus. In addition, the boundary of the structure is superimposed on the subject in the camera image, and thus accuracy in identifying the position in the subject is reduced.

Therefore, it is an object of the present invention to provide an X-ray Talbot imaging apparatus and an X-ray Talbot imaging method that can improve accuracy in identifying a position in a subject.

To achieve at least one of the abovementioned objects, according to an aspect of the present invention, an X-ray Talbot imaging apparatus reflecting one aspect of the present invention is an X-ray Talbot imaging apparatus for nondestructive inspection, the apparatus including: a radiation source; a subject table; a plurality of gratings; and a radiation detector. The radiation source, the subject table, the plurality of gratings, and the radiation detector are provided in order side by side in a radiation irradiation axis direction, the plurality of gratings include at least a first grating and a second grating in order from a grating close to the subject table, and an object that absorbs visible light is placed between the first grating and a subject.

To achieve at least one of the abovementioned objects, according to an aspect of the present invention, X-ray Talbot imaging method reflecting one aspect of the present invention is an imaging method using a nondestructive inspection X-ray Talbot imaging apparatus in which a radiation source, a subject table, a plurality of gratings, and a radiation detector are arranged in order side by side in a radiation irradiation axis direction, wherein the plurality of gratings include at least a first grating and a second grating in order from a grating close to the subject table, and an object that absorbs visible light is placed between the first grating and a subject, the method including: causing the radiation source to irradiate the subject arranged in the radiation irradiation axis direction with radiation; and generating at least a small-angle scattering image and/or a differential phase image of the subject based on a moire fringe image obtained by irradiation.

BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:

Fig. 1 is a diagram illustrating an example of the configuration of an X-ray Talbot imaging apparatus;
Fig. 2 is a plan view of a multi-slit;
Fig. 3 is a block diagram illustrating a functional configuration of a controller;

Fig. 4 is a diagram illustrating the principle of a Talbot interferometer;

FIG. 5 is a flowchart showing the imaging processing;

Fig. 6 is a diagram illustrating an example of the configuration of an X-ray Talbot imaging apparatus;

Fig. 7 is a diagram illustrating an example of the configuration of an X-ray Talbot imaging apparatus; and

Fig. 8 is a diagram illustrating a configuration example of an X-ray Talbot imaging system.

DETAILED DESCRIPTION

Hereinafter, one or more embodiments of the present invention will be described with reference to the drawings. However, the scope of the invention is not limited to the disclosed embodiments.

(Configuration of Radiation Imaging System)

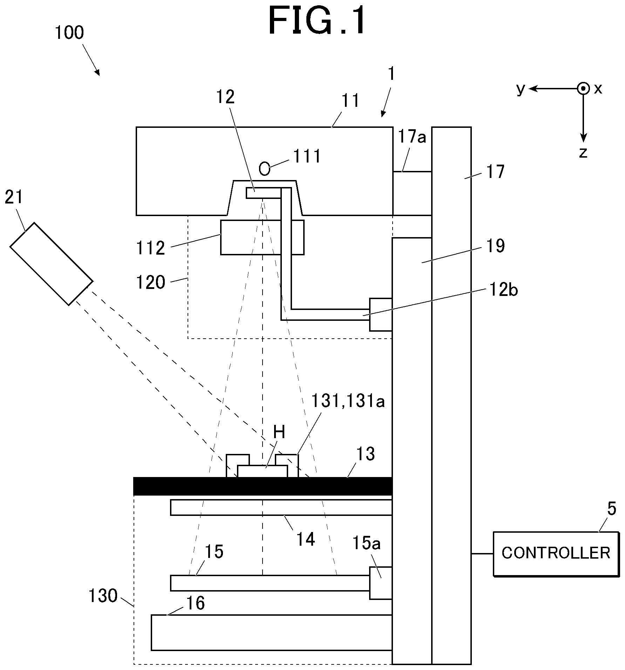

FIG. 1 is a view schematically showing an X-ray Talbot imaging apparatus 100 according to the first embodiment of the present invention.

As illustrated in Fig. 1, the X-ray Talbot imaging apparatus 100 includes a main body section 1 and a controller 5.

As illustrated in Fig. 1, the main body section 1 includes a Talbot -Lau interferometer having a radiation source 11, a first cover unit 120 including a multi-slit 12 and an additional filter/collimator 112, a second cover unit 130 including a subject table 13, a first grating 14, a second grating 15, and a radiation detector 16, a support column 17, and a base stand section 19. The Talbot -Lau interferometer of the main body section 1 is a vertical type, and the radiation source 11, the multi-slit 12, the subject table 13, the first grating 14, the second grating 15, and the radiation detector 16 are arranged in this order in the z direction which is the gravity (vertical) direction. Further, an imaging device 21 (camera) is provided at a location outside the X-ray irradiation range.

The multi-slit 12, the subject table 13, the first grating 14, the second grating 15, and the radiation detector 16 are held by the same base stand section 19 and attached to the support column 17. The base stand section 19 may be configured to be movable in the z-direction relative to the support column 17.

In addition to the base stand section 19, the radiation source 11 is attached to the support column 17. The radiation source 11 is held by the support column 17 via the buffer members 17a. The buffer member 17a may be made of any material that can absorb impact and vibration, such as elastomer. Since the radiation source 11 generates heat by irradiation with radioactive rays, the buffer member 17a on the side of the radiation source 11 is preferably additionally made of a heat insulating raw material.

The radiation source 11 includes an X-ray tube, generates X-rays with the X-ray tube, and emits the X-rays in the z direction (the direction of gravity). As the X-ray tube, for example, a Coolidge X-ray tube or a rotating anode X-ray tube can be used. As the anode, tungsten or molybdenum can be used.

The focal diameter of the radiation source 11 is preferably 0.03 to 3 (mm), and more preferably 0.1 to 1 (mm).

In the case of the vertical Talbot -Lau interferometer as illustrated in Fig. 1, the radiation irradiation axis direction is a direction perpendicular to a placement surface of the X-ray Talbot imaging apparatus 100.

Note that, in the present embodiment, a case where imaging is performed using X-rays will be described as an example, but other radiation, for example, neutron rays, gamma rays, or the like may be used.

The first cover unit 120 is a unit provided immediately below the radiation source 11. As illustrated in Fig. 1, the first cover unit 120 is configured to include the multi-slit 12, an attachment arm 12b, an additional filter/collimator 112, and the like. The constituent elements of the first cover unit 120 are protected by being covered with the cover member.

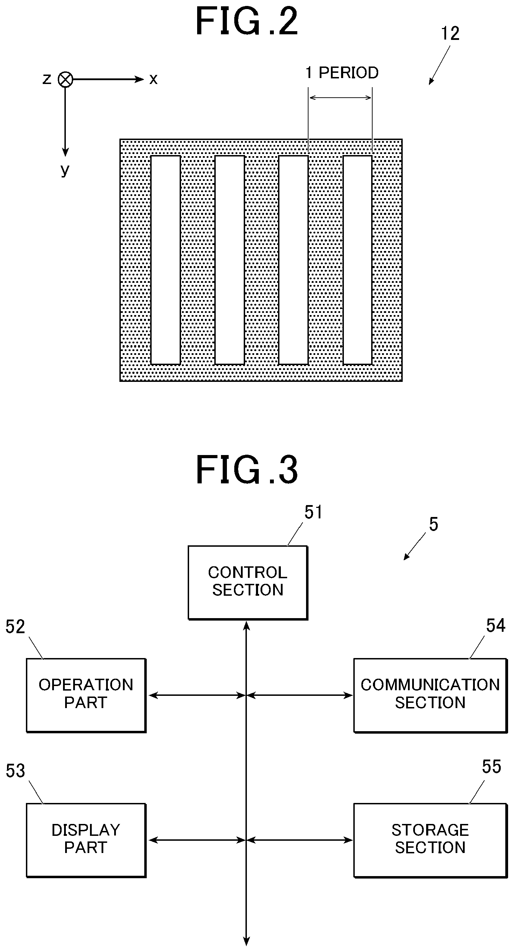

The multi-slits 12 (G0 grating) are diffraction gratings, and as illustrated in Fig. 2, a plurality of slits are arranged at predetermined intervals in the x direction orthogonal to the radiation irradiation axis direction (here, the z direction). The multi-slit 12 is formed of a material having a large shielding force against radiation, that is, a high absorptance of radiation, such as tungsten, lead, and gold, on a substrate of a material having a low absorptance of radiation, such as silicon and glass. Therefore, the multi-slit 12 may have metallic luster.

For example, a resist layer is masked in a slit shape by photolithography, and UV is applied to transfer the pattern of the slits to the resist layer. A slit structure having the same shape as the pattern is obtained by the exposure, and a metal is filled between the slit structures by an electroforming method, to form the multi-slits 12.

The slit period (grating period) of the multi-slit 12 is 1 to 60 ($\mu$m). As illustrated in Fig. 2, the distance between adjacent slits is one period of the slit period. The width of the slit (the length of each slit in the slit period direction (x direction)) is a length of 1 to 60 (%) of the slit period, and more preferably 10 to 40 (%). The height of the slits (the height in the z direction) is 1 to 1500 ($\mu$m), and preferably 30 to 1000 ($\mu$m). The multi-slit 12 is supported by the attachment arm 12b and is attached to the base stand section 19. The multi-slit 12 (G0 grating) may be omitted if the focal point of the X-ray tube of the radiation source 11 is small as in the case of a microfocus source, for example.

The additional filter/collimator 112 limits the irradiation region of the X-rays emitted from the radiation source 11, and removes low-energy components that do not contribute to imaging from the X-rays emitted from the radiation source 11.

As illustrated in Fig. 1, the second cover unit 130 is configured to include the subject table 13, the first grating 14, the second grating 15, the moving mechanism 15a, the radiation detector 16, and the like. The second cover unit 130 has an upper surface serving as the subject table 13, and covers the periphery of the subject table 13 with a cover member to protect the internal components from damage due to contact with the subject H or a technician and from entry of dust. In addition, since the temperature in the unit is less likely to be affected by the outside air, it is possible to reduce a change in the grating position due to thermal expansion or the like of the first grating 14 and the second grating 15.

The subject table 13 is a stand for placing the subject H at any position. The subject table 13 is provided with a fixing unit (holder) 131 that fixes the position of the subject H with respect to the X-rays emitted from the radiation source 11. The fixing unit 131 includes a fixing portion 131a that can fix the subject H at a predetermined position, and a moving mechanism (not illustrated) that can move the fixing portion in the X-axis direction and the Y-axis direction and can rotate the fixing portion around the Z-axis as a rotation shaft. By using such a fixing unit 131, the same part of the subject H can be accurately imaged a plurality of times by the X-ray Talbot imaging apparatus 100 in a state where the imaging angle or the grating facing angle (grating facing angle) is changed. In this case, the subject table 13 is movable.

Here, the imaging angle is an angle indicating the position of the subject H with respect to the X-ray Talbot imaging apparatus 100. The grating opposing angle is the relationship (angle) between the direction of the captured image (or the image displayed after the image capturing) and the direction of the grating (the multi-slit 12, the first grating 14, and the second grating 15).

Like the multi-slit 12, the first grating 14 (G1 grating) is a diffraction lattice in which a plurality of slits are arranged in the x direction orthogonal to the z direction that is the radiation irradiation axis direction. The first grating 14 can be formed by photolithography using UV as in the case of the multi-slit 12, or the grating structure may be formed of only silicon by performing deep processing on a silicon substrate with fine lines by a so-called ICP method. The slit period of the first grating 14 is 1 to 20 ($\mu$m). The width of the slits is 20 to 70 (%), preferably 35 to 60 (%) of the slit period. The height of the slits is 1 to 100 ($\mu$m).

An object that absorbs visible light is placed between the first grating 14 and the subject H. The object that absorbs visible light will be described later.

Like the multi-slit 12, the second grating 15 (G2 grating) is a diffractive grating in which a plurality of slits are arranged in the x direction orthogonal to the z direction that is the radiation irradiation axis direction. The second grating 15 can also be formed by photolithography. The slit period of the second grating 15 is 1 to 20 ($\mu$m). The width of the slits is 30 to 70 (%), preferably 35 to 60 (%) of the slit period. The height of the slits is 1 to 100 ($\mu$m). A moving mechanism 15a for moving the second grating 15 in the x direction is provided adjacent to the second grating 15. The moving mechanism 15a may have any configuration as long as the second grating 15 can be linearly fed in the x direction by driving a motor or the like.

In the radiation detector 16, conversion elements that generate electric signals in response to the emitted radiation are arranged in a two dimensional manner, and the electric signals generated by the conversion elements are read as image signals. The pixel size of the radiation detector 16 is 10 to 300 ($\mu$m), and more preferably 50 to 200 ($\mu$m). It is preferable that the position of the radiation detector 16 be fixed on the base stand section 19 so as to abut on the second grating 15. This is because as the distance between the second grating 15 and the radiation detector 16 increases, the moire fringe image obtained by the radiation detector 16 becomes blurred.

As the radiation detector 16, a flat panel detector (FPD) can be used. The FPD may be either an indirect conversion type in which radiation is converted into electrical signals by photoelectric conversion elements via a scintillator, or a direct conversion type in which radiation is directly converted into electrical signals.

Further, as the radiation detector 16, a radiation detector to which the intensity modulation effect of the second grating 15 is applied may be used. For example, it is possible to use, as the radiation detector 16, a slit scintillator detector in which grooves are formed in the scintillator to form a lattice-shaped scintillator in order to provide the scintillator with dead regions having the same period and width as the slits of the second grating 15. In this case, since the radiation detector 16 serves as both the second grating 15 and the radiation detector 16, it is not necessary to separately provide the second grating 15. That is, providing the slit scintillator detector is the same as providing the second grating 15 and the radiation detector 16.

Note that although the case where the Talbot -Lau interferometer of the main body section 1 is configured to emit X-rays toward the subject H below from the radiation source 11 provided on the upper side (the case of a so-called vertical type) has been described, the present invention is not limited thereto, and the Talbot -Lau interferometer may be configured to emit X-rays toward the subject H above from the radiation source 11 provided on the lower side. It is also possible to adopt a configuration in which X-rays are applied in any direction, such as a horizontal direction (in the case of a so-called horizontal type).

The imaging device 21 is a device that performs imaging with visible light or infrared rays. For example, the imaging device 21 is a visible light camera, an infrared camera, or the like.

The imaging device 21 is adjusted in accordance with the absolute position of the X-ray Talbot imaging apparatus 100 (the multi-slit 12, the first grating 14, and the second grating 15). Specifically, the adjustment is to match the coordinates of the visible light image, the infrared image, or the like captured by the imaging device 21 and the reconstructed image captured and generated by the radiation detector 16. For example, the adjustment is performed by arranging X-ray high-absorbency markers at five positions of four corners and the center of the imaging range on the subject table 13 and aligning the coordinates of the visible light image, the infrared image, or the like and the absorption image that have been captured. Therefore, the imaging device 21 can acquire relative position information of the subject with respect to the grating.

As illustrated in Fig. 3, the controller 5 includes the control section 51, an operation part 52, a display part 53, a communication section 54, and a storage section 55.

The control section 51 is composed of a central processing unit (CPU), a random access memory (RAM), and the like. The control section 51 is connected to each unit (for example, the radiation source 11, the radiation detector 16, the moving mechanism 15a, the imaging device 21, and the like) of the main body section 1, and controls the operation of each unit. In addition, the control section 51 performs various processes including an imaging processing to be described later in cooperation with a program stored in the storage section 55.

The control section 51 also functions as a Talbot imaging control unit that generates at least a small-angle scattering image and/or a differential phase image of the subject based on the moire fringe image obtained by irradiating the subject placed on the subject table 13 with radiation from the radiation source 11.

The operation part 52 includes a touch panel integrally formed with a display of the display part 53 in addition to a key group used for an input operation of an exposure switch, an imaging condition, or the like, generates an operation signal according to the operation, and outputs the operation signal to the control section 51.

The display part 53 displays an operation screen, an operation status of the main body section 1, and the like on the display according to display control of the control section 51.

The communication section 54 includes a communication interface and communicates with the external device on the network.

The storage section 55 is composed of a nonvolatile semiconductor memory, a hard disk and the like, and stores various information such as programs to be executed by the control section 51 and data necessary for executing the programs.

Furthermore, the storage section 55 may be provided with a database (DB) separately from the controller 5, and may manage various information in the database.

(imaging by Talbot interferometer and Talbot - Lau interferometer)

Here, an imaging method using the Talbot interferometer and the Talbot - Lau interferometer will be described. Imaging by a Talbot interferometer or a Talbot - Lau interferometer is referred to as Talbot imaging.

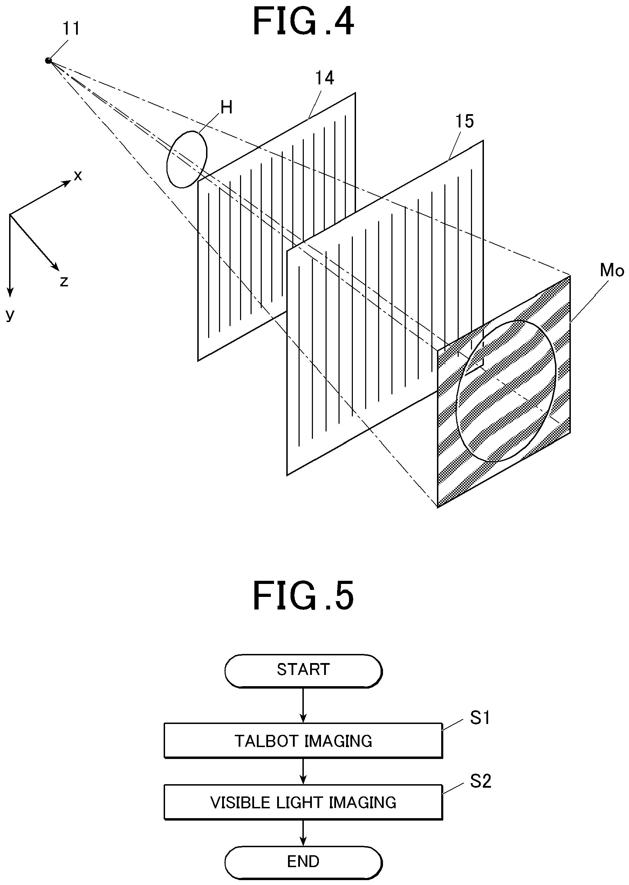

As shown in FIG. 4, when the X-rays emitted from the radiation source 11 pass through the first grating 14, the transmitted X-rays form images at regular intervals in the z-direction. This image is called a self-image, and a phenomenon in which the self-image is formed is called a Talbot effect. The second grating 15 is arranged substantially parallel to the self-image at a position where the self-image is formed, and a moire fringe image (indicated by Mo in FIG. 4) is obtained by the X-rays transmitted through the second grating 15. That is, the first grating 14 forms a periodic pattern, and the second grating 15 converts the periodic pattern into a moire fringe. If a subject H exists between the radiation source 11 and the first grating 14, the phase of the X-rays is shifted by the subject H. Therefore, as shown in FIG. 4, the moire fringes on the moire fringe image are disturbed with the edge of the subject H as a boundary. The disturbance of the moire fringes is detected by processing the moire fringe image, and the subject image can be imaged. This is the principle of the Talbot interferometer.

In the main body section 1, the multi-slit 12 is arranged at a position close to the radiation source 11 between the radiation source 11 and the first grating 14, and X-ray imaging by a Talbot - Lau interferometer is performed. Although the Talbot interferometer is based on the premise that the radiation source 11 is an ideal point radiation source, a focal point having a relatively large focal diameter is used for actual imaging. The multi-slit 12 provides an effect as if X-rays are emitted from a plurality of continuous point sources. This is an X-ray imaging method using a Talbot - Lau interferometer, and even when the focal diameter is large to some extent, a Talbot effect similar to that of the Talbot interferometer can be obtained.

Note that the X-ray Talbot imaging apparatus 100 includes an X-ray Talbot imaging apparatus using a Talbot interferometer and an X-ray Talbot -Lau imaging apparatus using a Talbot- Lau interferometer.

In the main body section 1 according to the present embodiment, moire fringe images required for generating a reconstructed image of the subject H are captured by a fringe scanning method. In general fringe scanning any one (the second grating 15 in the present embodiment) or two of the gratings (the multi-slit 12 the first grating 14 and the second grating 15) are relatively moved in the slit period direction (x direction) to perform imaging M times (M is a positive integer M>2 for an absorption image and M>3 for a differential phase image and a small-angle scattering image) (M-step imaging), this means acquiring M moire fringe images necessary for generating a reconstructed image. Specifically, when the slit period of the grating to be moved is d ($\mu$m), the grating is moved in the slit period direction by d/M ($\mu$m) at a time and imaging is repeatedly performed to acquire M moire fringe images.

The reconstructed image generated based on the moire fringe image includes a small-angle scattering image, a differential phase image, and an absorption image.

The small-angle scattering image is obtained by imaging scattering of X-rays in a microstructure. In the small-angle scattering image, the greater the scattering of X-rays, the greater the signal value. In the small-angle scattering image, a microstructure aggregate of several $\mu$m to several tens of $\mu$m, which is smaller than the pixel size, can be captured.

The differential phase image is obtained by imaging the refraction of X-rays by the subject. In the differential phase image, the greater the refraction of X-rays, the greater the signal value. In the absorption image, the sensitivity becomes lower as the element is lighter, but in the differential phase image, the sensitivity can be kept high even with a light element, and therefore, a change in a substance that is difficult to capture in the absorption image can also be captured.

The absorption image is obtained by imaging absorption of X-rays by a subject, and the absorption image is an image equivalent to a conventional simple X-ray image.

In the generation of the reconstructed image, for example, first, offset correction processing, gain correction processing, defective pixel correction processing, X-ray intensity fluctuation correction, and the like are performed on the subject moire fringe image (the moire fringe image with the subject). Next, a reconstructed image is generated on the basis of the corrected subject moire fringe image and a BackGround (BG) moire fringe image for generating a reconstructed image. The BG moire fringe image is a moire fringe image acquired by moving the second grating 15 under the same X-ray irradiation conditions (tube voltage, mAs value, and filter) as those of the subject moire fringe image in a state where the subject H is removed from the subject table 13.

The absorption image is generated by logarithmically converting a transmittance image that is generated by dividing an addition image of the M subject moire fringe images by an addition image of the M BG moire fringe images.

The differential phase image is generated by calculating the phase of the moire fringes using the principle of the fringe scanning method for each of the subject moire fringe image and the BG moire fringe image to generate each of a differential phase image with the subject and a differential phase image without the subject and subtracting the differential phase image without the subject from the generated differential phase image with the subject.

The small-angle scattering image is generated by calculating the Visibility of the moire fringes using the principle of the fringe scanning method for each of the subject moire fringe image and the BG moire fringe image to generate each of the small-angle scattering image with the subject and the small-angle scattering image without the subject, and dividing the generated small-angle scattering image with the subject by the small-angle scattering image without the subject. Visibility (Visibility= amplitude ÷ average value) will be described in detail later.

Note that it is also possible to generate more types of images by, for example, re-synthesizing the above three types of reconstructed images. For example, using small-angle scattering images captured at a plurality of (one or more) grating opposing angles, the images are aligned, and then fitting is performed with a sine wave for each pixel to extract fitting parameters. The graph of the sine wave is a graph in which the horizontal axis represents the relative angle between the sample and the grating and the vertical axis represents the small-angle scattering signal value of a certain pixel. The amplitude, average, and phase of the sine wave are obtained as fitting parameters. An image representing an amplitude value for each pixel is referred to as an orientation degree image, an image representing an average value for each pixel is referred to as a scattering intensity image, and an image representing a phase for each pixel is referred to as an orientation angle image. Note that the fitting method is not limited to a sine wave.

Thereafter, images (the orientation degree image, the scattering intensity image, and the orientation angle image) generated by re-synthesizing the reconstructed images are collectively referred to as an orientation analysis image. That is, the orientation analysis image is generated based on a plurality of small-angle scattering images captured by changing the relative angle of the subject with respect to the slits of the grating of the X-ray Talbot imaging apparatus.

(object absorbing visible light)

As described above, an object that absorbs visible light is placed between the first grating 14 and the subject H. The example illustrated in Fig. 1 is an example in which the subject table 13 is an object that absorbs visible light.

Absorbing visible light means that visible light is not reflected and not transmitted. For example, absorbing visible light means that reflectance is 98% or less and transmissivity is 5% or less in a visible light region (400 to 800 nm). Absorbing visible light is not limited to the above-described example. For example, the reflectance in the visible light region is preferably 90% or less.

Accordingly, when the subject H is imaged by the imaging device 21, the structures (the first grating 14, the grating frame, the grating support portion, and the like) on the radiation detector 16 side with respect to the subject H are prevented from being reflected.

Specifically, for example, the subject table 13 is colored with dye. Thus, visible light is absorbed. Further, when the radiation passes through the subject table 13, the radiation is prevented from being excessively scattered. Excessive scattering of radiation refers to a degree of scattering that interferes with imaging of a moire fringe image by the radiation detector 16. Although it is desirable that the subject table 13 is colored with dye, the subject table 13 may be colored with pigment.

It is desirable that the color be, for example, black. Thus, the visible light is more likely to be absorbed by the subject table 13.

The distance between the subject table 13 and the first grating 14 is equal to or larger than 0. 5 cm and equal to or smaller than 20 cm. Since the mechanical strength of the first grating 14 is low, setting the distance between the subject table 13 and the first grating 14 to less than 0. 5 cm increases the risk that the first grating 14 and the subject table 13 come into contact with each other and the first grating 14 becomes defective. Making the distance between the subject table 13 and the first grating 14 greater than the 20 cm decreases the intensity of the radioactive rays before the radioactive rays that have passed through the subject H reach the first grating 14. More preferably, the distance between the subject table 13 and the first grating 14 is equal to or larger than 2 cm and equal to or smaller than 3 cm.

The flexural modulus of the subject table 13 is, for example, 1GPa or higher (ASTEM D790). The tensile strength of the subject table 13 is, for example, 20 MPa or higher (ASTEM D638).

The subject table 13 is, for example, 0. 5 mm thick or thicker.

The subject table 13 has a linear expansion coefficient of, for example, $10 \times 10^{-5}/°C$ or more.

It is desirable that the subject table 13 has low scattering. When the radiation that has passed through the subject H is scattered on the subject table 13, the amount of radiation that reaches the radiation detector 16 decreases, and the visibility of the subject H on the Talbot image decreases. Specifically, a decrease in performance (visibility) due to the subject table 13 is 10% or less.

Here, characteristic values of the moire fringe image will be described. The characteristic values of the moire fringe image include the average intensity (average intensity of X-rays) a0, the amplitudes a1, the phases Φ, the visibility vis, which represent the features of the moire fringe image, and noise indices calculated from these characteristic values.

When attention is paid to one arbitrary pixel of the moire fringe image, the pixel signal value representing the X-ray intensity changes substantially like a sine function. The sine function is characterized by parameters of a average intensity (average intensity of X-rays) a0, an amplitude a1, and a phase Φ.

The average intensities a0 (x, y), the amplitudes a1 (x, y), and the phases Φ(x, y) of the pixels of the moire fringe image are given by (Equation 1) to (Equation 3), respectively. Here, I represents an X-ray intensity signal value, and x and y represent two dimensional coordinates of the moire fringe image. M is the number of fringe scans.

The definition vis (x, y) of each pixel of the moire fringe image is defined by the following (Equation 4).

(Equation 1)

$$a_0(x,y) = \frac{\sum_{k=0}^{M-1} I_k(x,y)}{M}$$

(Equation 2)

$$a_1(x,y) = \frac{2\left|\sum_{k=0}^{M-1} I_k(x,y) \cdot \exp\left(-2\pi i \frac{k}{M}\right)\right|}{M}$$

(Equation 3)

$$\Phi(x,y) = \arg\left[\sum_{k=0}^{M-1} I_k(x,y)\exp\left(-2\pi i \frac{k}{M}\right)\right]$$

(Equation 4)

$$vis(x,y) = \frac{a_1(x,y)}{a_0(x,y)} = \frac{2\left|\sum_{k=0}^{M-1} I_k(x,y)\exp\left(-2\pi i\frac{k}{M}\right)\right|}{\sum_{k=1}^{M} I_k(x,y)}$$

An average value of the definition vis of each pixel in the region of interest, for example, in a region of 1000 pixels is calculated and set as vis in each imaging, and a reduction rate is obtained from 1 -(vis when the subject plate is present/vis when the subject plate is not present).

The X-ray transmittance of the subject table 13 is, for example, 90% or more.

When the subject table 13 is made of plastic, the coefficient of static friction of the plastic is, for example, 0.1 or more (JISK7125).

(Operation of X-ray Talbot imaging apparatus 100)

Next, operation of the X-ray Talbot imaging apparatus 100 will be described.

Fig. 5 is a flowchart illustrating imaging processing performed by the control section 51 of the X-ray Talbot imaging apparatus 100 in cooperation with a program stored in the storage section 55. The imaging device 21 is assumed to be a camera that captures a visible light image.

First, the control section 51 controls various components of the X-ray Talbot imaging apparatus 100 to perform the above-described Talbot imaging and acquire a reconstructed image and an orientation analysis image (step S1). At this time, the control section 51 functions as a Talbot imaging controller.

Next, the control section 51 causes the imaging device 21 to capture an image of the subject H and acquires a visible light image (step S2). The control section 51 ends the imaging processing.

A user can specify a position in the subject on the basis of the visible light image corresponding to the region of interest in the reconstructed image or the orientation analysis image. When an object that absorbs visible light is placed between the first grating 14 and the subject H, the visible light image becomes clear.

(others)

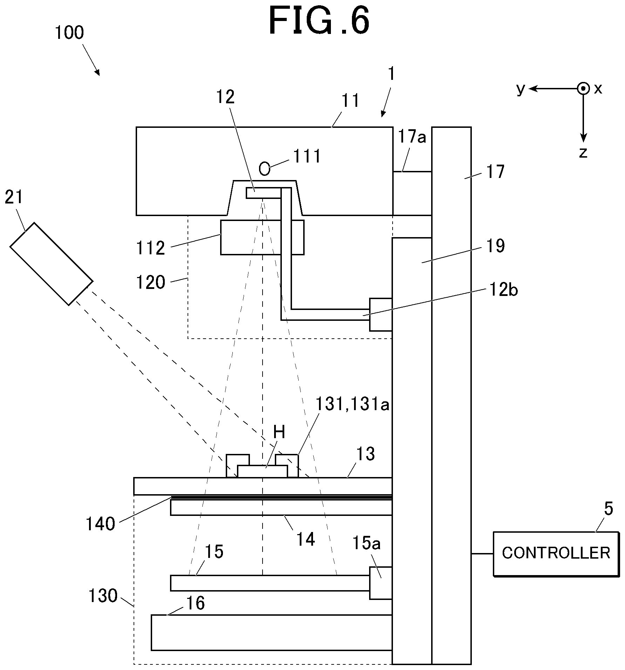

Although the object that absorbs visible light has been mainly described above with the subject table 13 as an example, the object that absorbs visible light is not limited to the subject table 13 as illustrated in Fig. 1. The object that absorbs visible light may be, for example, a cloth 140 that is disposed between the subject table 13 and the first grating 14 and does not absorb radiation (X-rays), as illustrated in FIG. 6. The object that absorbs visible light may be a film that does not absorb radiation (X-rays), instead of the cloth 140. A mat or the like that does not absorb radiation (X-rays) but absorbs visible light may be placed on the subject table 13. Similarly to the above, specifically, the object that absorbs visible light may be colored with, for example, a dye.

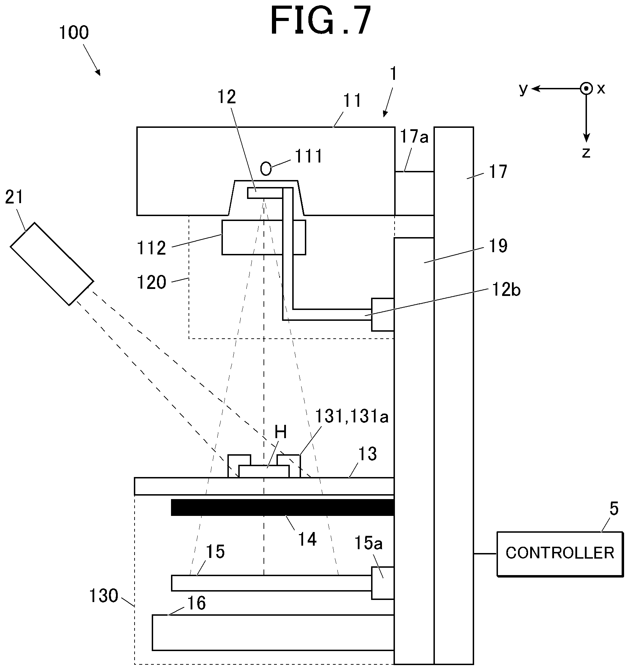

As shown in FIG. 7, the first grating 14 may function as an object that absorbs visible light. Specifically, the first grating 14 may be coated with a substance such as a dye or a pigment that absorbs visible light.

The object that absorbs visible light is not limited to the above-described configuration. That is, the configuration can be appropriately changed as long as it is possible to prevent the structures (the first grating 14, the grating frame, the grating support portion, and the like) closer to the radiation detector 16 than the subject H from being reflected when the subject H is imaged by the imaging device 21.

The above-described object absorbing visible light may be read as an object absorbing infrared rays. In a case where the imaging device 21 is an infrared camera that acquires an infrared image, an object that absorbs infrared rays is used instead of an object that absorbs visible light.

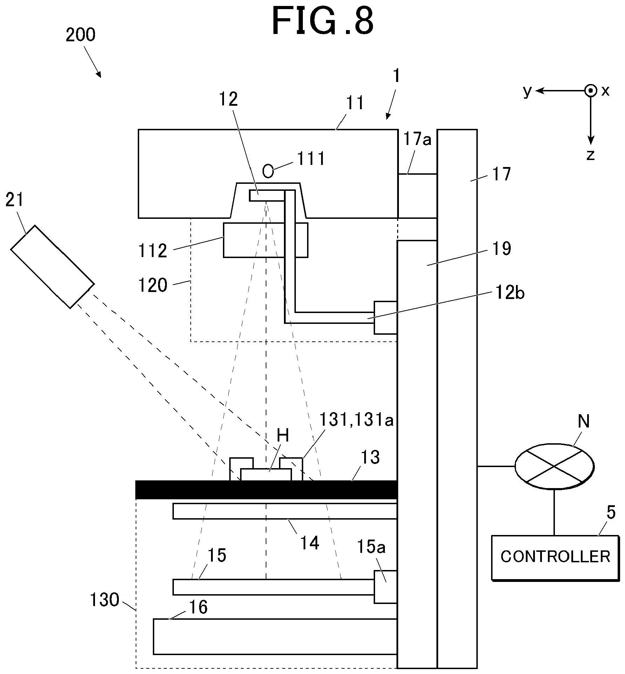

As illustrated in Fig. 8, it is also possible to adopt a configuration (an X-ray Talbot imaging system 200) in which the main body section 1 and the controller 5 are connected via a communication network N. The main body section 1 and the controller 5 can transmit and receive various signals and various data via the communication network N. The communication network N is, for example, a local area network (LAN), a wide area network (WAN), the Internet, or the like.

(effect or the like)

As described above, the X-ray Talbot imaging apparatus 100 is an X-ray Talbot imaging apparatus for nondestructive inspection, and includes the radiation source 11, the subject table 13, a plurality of gratings, and the radiation detector 16 which are arranged in this order side by side in a radiation irradiation axis direction, the plurality of gratings include at least a first grating and a second grating in order from the grating close to the subject table 13, and the object absorbing visible light is placed between the first grating and the subject.

Thus, in imaging of the subject H using the imaging device 21 such as a camera capable of acquiring a visible light image or the like, a structure is prevented from being reflected in the background of the subject H. Therefore, accuracy in identifying the position in the actual object of the subject by the user is improved.

Note that the X-ray Talbot imaging apparatus 100 is an X-ray Talbot imaging apparatus used for nondestructive inspection because nondestructive inspection requires accurate alignment of a region of interest in a reconstructed image or an orientation analysis image with the position in the actual object of the subject H corresponding to the region of interest. In a situation in which such a position needs to be accurately aligned, the above-described effect can be obtained without being limited to the nondestructive inspection.

The imaging method is an imaging method using a nondestructive inspection X-ray Talbot imaging apparatus (X-ray Talbot imaging apparatus 100) in which a radiation source 11, a subject table 13, a plurality of gratings, and a radiation detector 16 are provided in order side by side in a radiation irradiation axis direction, the plurality of gratings include at least a first grating and a second grating in order from a grating close to the subject table 13, and an object absorbing visible light is installed between the first grating and a subject H, and the imaging method includes a Talbot imaging control step (step S1) of irradiating the subject H arranged in the radiation irradiation axis direction with radioactive rays by the radiation source 11 and generating at least a small-angle scattering image and/or a differential phase image of the subject H on the basis of a moire fringe image obtained by the irradiation.

Thus, in imaging of the subject H using the imaging device 21 such as a camera capable of acquiring a visible light image or the like, a structure is prevented from being reflected in the background of the subject H. Therefore, accuracy in identifying the position in the actual object of the subject by the user is improved.

Although the embodiment of the present invention and the modifications thereof have been described above, the description in the above-described embodiment is a preferred example according to the present invention, and the present invention is not limited thereto.

For example, in the above embodiment, the inspection apparatus using the Talbot -Lau interferometer of a type in which the second grating 15 is moved with respect to the multi-slit 12 and the first grating 14 at the time of imaging by the fringe scanning method has been described as an example. However, the present invention may be applied to an inspection apparatus using a Talbot -Lau interferometer of a type in which any one or two of the multi-slit 12, the first grating 14, and the second grating 15 are moved during imaging by the fringe scanning method. The present invention may be applied to an inspection apparatus using a Talbot interferometer of a type in which one of the first grating 14 and the second grating 15 is moved with respect to the other grating. Furthermore, the present invention may be applied to an inspection apparatus using a Lau interferometer of a type in which one of the multi-slit 12 and the first grating 14 is moved with respect to the other grating. Furthermore, the present invention may be applied to a Talbot - Lau interferometer, a Talbot interferometer, and a Lau interferometer that use a Fourier transform method that does not require fringe scanning.

Furthermore, for example, although the above description discloses an example in which a hard disk, a semiconductor nonvolatile memory, or the like is used as a computer-readable medium for the program according to the present invention, it is not limited to this example. As other computer-readable media, a portable recording medium such as a CD-ROM can be applied. In addition, a carrier wave is also applied as a medium for providing data of the program according to the present invention via a communication line.

In addition, the detailed configuration and the detailed operation of each device constituting the X-ray Talbot imaging apparatus can also be appropriately changed without departing from the spirit of the invention.

Although embodiments of the present invention have been described and illustrated in detail, the disclosed embodiments are made for purposes of illustration and example only and not limitation. The scope of the present invention should be interpreted by terms of the appended claims.

The entire disclosure of Japanese Patent Application No. 2023-074474 filed on April 28, 2023 is incorporated herein by reference in its entirety.

**Claims**

1. An X-ray Talbot imaging apparatus (100) for nondestructive inspection, the apparatus comprising:

a radiation source (11);
a subject table (13);
a plurality of gratings (14, 15); and
a radiation detector (16), wherein
the radiation source, the subject table, the plurality of gratings, and the radiation detector are provided in order side by side in a radiation irradiation axis direction,
the plurality of gratings include at least a first grating (14) and a second grating (15) in order from a grating close to the subject table, and
an object that absorbs visible light is placed between the first grating and a subject.

2. The X-ray Talbot imaging apparatus according to claim 1, wherein the object that absorbs the visible light is an object dyed with a dye.

3. The X-ray Talbot imaging apparatus according to claim 2, wherein the object dyed with the dye is black.

4. The X-ray Talbot imaging apparatus according to claim 1, wherein the object that absorbs the visible light is a subject table dyed with a dye.

5. The X-ray Talbot imaging apparatus according to claim 4, wherein the subject table is black.

6. The X-ray Talbot imaging apparatus according to claim 1, wherein the first grating has metallic luster.

7. The X-ray Talbot imaging apparatus according to claim 1, wherein a distance between the subject table and the first grating is equal to or larger than 0. 5 cm and equal to or smaller than 20 cm.

8. The X-ray Talbot imaging apparatus according to claim 1, further comprising a camera (21) that uses visible light or infrared light.

9. The X-ray Talbot imaging apparatus according to claim 1, wherein the radiation irradiation axis direction is a direction perpendicular to a placement surface of the X-ray Talbot imaging apparatus.

10. The X-ray Talbot imaging apparatus according to claim 1, wherein the subject table is movable.

11. The X-ray Talbot imaging apparatus according to claim 1, wherein the subject is placed at any position on the subject table.

12. The X-ray Talbot imaging apparatus according to claim 1, further comprising a holder (131) that fixes the subject to the subject table.

13. An imaging method using a nondestructive inspection X-ray Talbot imaging apparatus (100) in which a radiation source (11), a subject table (13), a plurality of gratings (14, 15), and a radiation detector (16) are arranged in order side by side in a radiation irradiation axis direction, wherein the plurality of gratings include at least a first grating (14) and a second grating (15) in order from a grating close to the subject table, and an object that absorbs visible light is placed between the first grating and a subject, the method comprising:

causing the radiation source to irradiate the subject arranged in the radiation irradiation axis direction with radiation; and
generating at least a small-angle scattering image and/or a differential phase image of the subject based on a moire fringe image obtained by irradiation.

# FIG.1

# FIG.2

z ⊗ ——→ x

↓ y

1 PERIOD

12

# FIG.3

51

CONTROL SECTION

5

52

OPERATION PART

54

COMMUNICATION SECTION

53

DISPLAY PART

55

STORAGE SECTION

# FIG.4

# FIG.5

```
        START
          │
          ▼
┌──────────────────────┐  S1
│    TALBOT IMAGING     │
└──────────────────────┘
          │
          ▼
┌──────────────────────┐  S2
│  VISIBLE LIGHT IMAGING │
└──────────────────────┘
          │
          ▼
         END
```

# FIG.6

# FIG.7

# FIG.8

Europäisches
Patentamt
European
Patent Office
Office européen
des brevets

# EUROPEAN SEARCH REPORT

Application Number

EP 24 17 0491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | JP 2013 255536 A (KONICA MINOLTA INC) 26 December 2013 (2013-12-26) * abstract; figures * | 1-13 | INV. G01N23/041 |
| Y,D | JP 2020 024170 A (SHIMADZU CORP) 13 February 2020 (2020-02-13) * abstract; figures * | 1,13 | |
| Y | CHRISTIAN G. FEILER ET AL: "An All-in-one Sample Holder for Macromolecular X-ray Crystallography with Minimal Background Scattering", JOURNAL OF VISUALIZED EXPERIMENTS, no. 149, 6 July 2019 (2019-07-06), XP055665341, DOI: 10.3791/59722 * figure 1 * | 1,13 | |
| Y | GRÜTZMACHER PHILIPP G ET AL: "How to guide lubricants - Tailored laser surface patterns on stainless steel", APPLIED SURFACE SCIENCE, ELSEVIER, AMSTERDAM , NL, vol. 370, 15 February 2016 (2016-02-15), pages 59-66, XP029473942, ISSN: 0169-4332, DOI: 10.1016/J.APSUSC.2016.02.115 * paragraph [02.5] * | 1-13 | TECHNICAL FIELDS SEARCHED (IPC) G01N H05G G21K |

The present search report has been drawn up for all claims

| Place of search | Date of completion of the search | Examiner |
|---|---|---|
| The Hague | 11 September 2024 | Kraus, Leonie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0491

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | | Publication date | Patent family member(s) | | Publication date |
|---|---|---|---|---|---|
| JP 2013255536 | A | 26-12-2013 | NONE | | |
| JP 2020024170 | A | 13-02-2020 | JP | 7147346 B2 | 05-10-2022 |
| | | | JP | 2020024170 A | 13-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013255536 A
- JP 2020024170 A
- JP 2023074474 A